# FASCICULE DE BREVET EUROPEEN

(11) **EP 4 048 528 B1**
(45) Date de publication et mention de la délivrance du brevet: **03.09.2025**
(21) Numéro de dépôt: 20804612.8
(22) Date de dépôt: 19.10.2020
(51) Int. Cl.: B60C 9/00, B60C 11/04, B60C 9/20, B60C 9/18

(54) **ARMATURE DE SOMMET POUR PNEUMATIQUE DE TYPE METROPOLITAIN**
SCHEITELVERSTÄRKUNG FÜR REIFEN DES TYPS METROPOLITAN
CROWN REINFORCEMENT FOR METROPOLITAN TYPE TYRE

(30) Priorité: 22.10.2019 FR 1911818
(43) Date de publication de la demande: 31.08.2022
(73) Titulaire: COMPAGNIE GENERALE DES ETABLISSEMENTS MICHELIN, 63000 Clermont-Ferrand (FR)
(72) Inventeur: DE BENEDITTIS, Eric, 63040 CLERMONT-FERRAND Cedex 9 (FR); ORAISON, Stéphane, 63040 CLERMONT-FERRAND Cedex 9 (FR); SALLAZ, Gilles, 63040 CLERMONT-FERRAND Cedex 9 (FR)
(74) Mandataire: M.F.P. Michelin
(86) Numéro de dépôt international: PCT/FR2020/051881
(87) Numéro de publication internationale: WO 2021/079051

(56) Documents cités:
- EP-B1- 3 826 863
- WO-A1-2018/091837
- WO-A1-2019/020886
- WO-A1-2019/020887
- WO-A1-2019/020888
- US-A1- 2015 258 856

## Description

La présente invention concerne un pneumatique, à armature de carcasse radiale et plus particulièrement un pneumatique destiné à équiper des véhicules guidés de transport en commun, pouvant rouler en site propre, et plus particulièrement des métropolitains de type lourd ou léger, monorail, ou autres véhicules de ce type.

D'une manière générale dans les pneumatiques à armature de carcasse radiale pour le transport de charge lourde, ladite armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection. L'armature de sommet peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la couche de sommet dite de travail, radialement la plus intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En combinaison avec la structure interne de pneumatique, il est connu de pourvoir la bande de roulement, c'est-à-dire la partie du pneu destinée à venir en contact avec le sol lors du roulage et à s'user lors du roulage, d'une sculpture formée d'éléments de relief délimités par des rainures notamment d'orientation circonférentielle.

Il est également connu de former sur la surface de roulement une pluralité d'arêtes orientées transversalement ou en oblique. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneumatique.

Les arêtes orientées transversalement ou en oblique de la bande de roulement assurent notamment l'adhérence du pneumatique sur les pistes sur lesquelles le métropolitain est amené à circuler.

Lorsque l'armature de sommet est constituée de deux couches de travail dont les éléments de renforcement sont croisés entre eux et forment des angles compris entre 10° et 45°, il apparait en usage des contraintes au niveau de l'armature de sommet et plus particulièrement des contraintes de cisaillement entre les couches de sommet qui peuvent conduire dans certaines conditions d'utilisation à une séparation des couches de travail au niveau des épaules du pneumatique pouvant conduire à une dégradation du pneumatique.

La proximité de conducteurs électriques nécessaires pour l'alimentation des véhicules en électricité entraine un risque non nul d'apparition d'arcs électriques entre ces conducteurs et des débris métalliques issus d'un pneumatique en cas de dégradation de celui-ci.

Pour éliminer ce risque et éviter la présence de débris métalliques, des solutions d'armature de sommet comportant uniquement des éléments de renforcement en matériau textile ont été développées. La demande de brevet WO 97/15463 décrit ainsi une armature de sommet constituée d'une ou plusieurs couches d'éléments de renforcement textiles orientés circonférentiellement.

Si de tels pneumatiques permettent effectivement d'apporter une solution aux risques liés à la présence de débris métalliques, les roulages ont mis en évidence des problèmes d'usure des pneumatiques et plus précisément d'usure irrégulière. En effet, la forte motricité de ce type de véhicule liée à l'usage qui en est fait et notamment les variations très importantes de charges qui existent par exemple entre les heures de pointe avec une charge maximale et les heures creuses durant lesquelles le véhicule circule avec peu ou pas de passagers associées à des phases de freinage et d'accélération intenses et répétitives conduisent à une usure très prononcée au niveau des épaules du pneumatique nécessitant des remplacements fréquents des pneumatiques.

Les documents WO2019/0230886, WO 2019/020887 et WO 2019/020888 décrivent des pneumatiques pour véhicules de tourisme dont l'armature sommet comporte deux couches constituées de fils métalliques croisés d'une couche à l'autre, surmontées d'une couche d'éléments de renforcement textiles.

Le document WO 2018/091837 décrit un pneumatique pour véhicule de génie civil dont l'armature de sommet comporte au moins cinq couches.

Le document EP 3826863 B1 divulgue un pneumatique pour véhicule de type métropolitain avec une armature de sommet comprenant au moins une couche d'éléments de renforcement circonférentiels métalliques, radialement extérieure aux deux couches de travail.

Par ailleurs, dans le domaine des pneumatiques pour poids lourds, il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels. Le document US 2015/258856 A1 décrit encore un pneumatique comportant une telle couche d'éléments de renforcement circonférentiels.

Il est encore connu de la demande de brevet WO 99/00260 un pneumatique pour poids lourds dans lequel une armature de protection constituée d'une couche d'éléments de renforcement circonférentiels est positionnée radialement à l'extérieur de l'armature de travail.

Les inventeurs se sont ainsi donnés pour mission de fournir des pneumatiques pour véhicules de type métropolitain qui ne présentent pas de risques en lien avec la proximité de conducteurs électriques et qui présentent des performances en termes d'usure satisfaisantes.

Ce but a été atteint selon l'invention par un pneumatique pour véhicule de type métropolitain, comprenant une armature de carcasse radiale, ledit pneumatique comprenant une armature de sommet, comprenant deux couches de sommet de travail d'éléments de renforcement métalliques croisés d'une couche à l'autre en faisant avec la direction circonférentielle des angles compris entre 10° et 45°, lesdits angles étant orientés de part et d'autre de la direction circonférentielle, l'armature de sommet étant coiffée radialement d'une bande de roulement comportant au moins une découpure circonférentielle, ladite bande de roulement étant réunie à deux bourrelets par l'intermédiaire de deux flancs, l'armature de sommet comprenant au moins une couche d'éléments de renforcement circonférentiels métalliques, radialement extérieure aux deux couches de travail, les deux couches de sommet de travail et ladite au moins une couche d'éléments de renforcement circonférentiels étant seules présentes pour constituer l'armature de sommet sur la totalité de la largeur axiale de l'armature de sommet et, dans un plan méridien, la distance D, entre le point radialement le plus intérieur de la découpure circonférentielle axialement la plus proche du plan équatorial et un point de la surface extérieure de ladite au moins une couche d'éléments de renforcement circonférentiels étant inférieure à 8 mm, ladite distance D étant mesurée selon la direction de la projection orthogonale du point radialement le plus intérieur de la découpure circonférentielle axialement la plus proche du plan équatorial sur la surface radialement extérieure de ladite au moins une couche d'éléments de renforcement circonférentiels.

Au sens de l'invention, la surface radialement extérieure de la couche d'éléments de renforcement circonférentiel est définie par la surface extrapolée des points radialement les plus extérieurs des éléments de renforcement constituant la couche d'éléments de renforcement circonférentiels.

Conformément à l'invention, l'armature de sommet peut comprendre une ou plusieurs couches d'éléments de renforcement circonférentiels métalliques. Dans le cas de plusieurs couches d'éléments de renforcement circonférentiels métalliques, les deux couches de sommet de travail et lesdites plusieurs couche d'éléments de renforcement circonférentiels sont seules présentes pour constituer l'armature de sommet sur la totalité de la largeur axiale de l'armature de sommet.

La mesure de la distance D est effectuée sur une coupe transversale d'un pneumatique, le pneumatique étant donc dans un état non gonflé. Dans le cas de plusieurs couches d'éléments de renforcement circonférentiels métalliques, radialement extérieures aux deux couches de travail, la distance D est mesurée entre le point radialement le plus intérieur de la découpure axialement la plus proche du plan équatorial et un point de la surface extérieure de la couche d'éléments de renforcement circonférentiels radialement la plus extérieure.

Les angles exprimés en degré, sont mesurés sur une coupe du pneumatique. Les mesures d'angles sont selon l'invention réalisées au niveau du plan médian circonférentiel.

Avantageusement selon l'invention, le pneumatique est destiné à être gonflé à une pression de gonflage supérieure ou égale à 11.5 bar.

Selon un mode de réalisation préféré de l'invention, la découpure circonférentielle axialement la plus proche du plan équatorial est une rainure circonférentielle.

Avantageusement selon l'invention, la distance D est inférieure à 5 mm.

Avantageusement encore, l'angle formé avec la direction circonférentielle par les éléments de renforcement des couches de sommet de travail est inférieur à 30° et de préférence inférieur à 25°.

Les résultats obtenus avec des pneumatiques conformes à l'invention ont effectivement mis en évidence que les performances en termes d'endurance sont améliorées, les pneumatiques ne présentant en conséquence aucun risque au regard des conducteurs électriques présents dans l'environnement et que par ailleurs les performances en termes d'usure sont satisfaisantes.

Les inventeurs ont en effet su mettre en évidence que la combinaison de deux couches de travail comportant des éléments de renforcement métalliques associées à au moins une couche d'éléments de renforcement circonférentiels métalliques positionnée radialement à l'extérieur des deux couches de travail permet de garantir l'endurance de l'armature de sommet malgré les contraintes de cisaillement qui s'imposent aux couches de travail. Le pneumatique selon l'invention ne présente ainsi aucun risque de générer des débris métalliques à proximité des conducteurs électriques.

Par ailleurs, la présence de ladite au moins une couche d'éléments de renforcement circonférentiels en position radialement la plus extérieure de l'armature de sommet permettrait de contenir l'ensemble du pneumatique et donc d'éviter la génération de débris métalliques au cas improbable d'une séparation des couches de travail soumises aux contraintes de cisaillement.

En outre, la combinaison du positionnement de ladite au moins une couche d'éléments de renforcement circonférentiels et de la distance D, correspondant à l'épaisseur de matière caoutchouteuse dans la zone radialement intérieure au fond des creux de sculpture, qui est considérablement réduite en comparaison de conceptions de pneumatiques plus usuelles, favorise les performances en termes d'usure du pneumatique. Les inventeurs ont en effet su mettre en évidence que le rapprochement ainsi obtenu entre la couche d'éléments de renforcement circonférentiels et la surface radialement extérieure de la bande de roulement du pneumatique qui vient au contact du sol permet de limiter les cisaillements subis par les mélanges constituant la bande de roulement lors des roulages et uniformise les efforts de la bande de roulement contribuant ainsi à de meilleures performances en usure, quelles que soient les conditions de charge ou de variations de charge du métropolitain.

Selon un mode de réalisation de l'invention, les éléments de renforcement des couches de sommet de travail sont des câbles métalliques inextensibles.

Selon une variante avantageuse de réalisation de l'invention, ladite au moins une couche d'éléments de renforcement circonférentiels présente une largeur axiale supérieure à 0.5xL.

L est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, les deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation avantageux de l'invention, les éléments de renforcement de ladite au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa, la contrainte de traction correspondant à une tension mesurée ramenée à la section de métal de l'élément de renforcement. Les mesures sont réalisées sur des câbles extraits du pneumatique sur une partie de la couche d'éléments de renforcement circonférentiels s'étendant depuis une extrémité axiale de ladite couche sur une largeur axiale de 50 mm vers l'intérieur de ladite couche.

Les modules des mêmes éléments de renforcement peuvent être mesurés sur une courbe contrainte de traction en fonction de l'allongement déterminée avec une précontrainte de 10 MPa, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique ; cette section globale de l'élément de renforcement concerné est approximativement le double de la section de métal de l'élément de renforcement.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieur à 40 GPa.

De préférence également, le module tangent maximum des éléments de renforcement est inférieur à 65 GPa et de préférence encore inférieur à 60 GPa.

Selon un mode de réalisation préféré, les éléments de renforcements de ladite au moins une couche d'éléments de renforcement circonférentiels sont des éléments de renforcement métalliques présentant une courbe contrainte de traction en fonction de l'allongement relatif ayant une faible pente pour les faibles allongements et une pente sensiblement constante et forte pour les allongements supérieurs.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.8/7.5 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 5.6/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formés d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

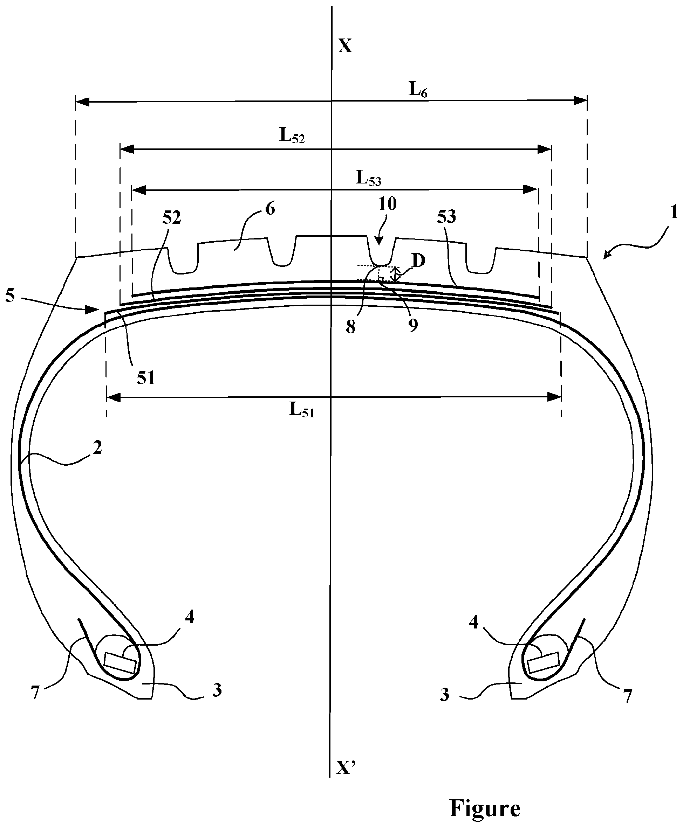

D'autres détails et caractéristiques avantageux de l'invention ressortiront ci-après de la description d'un exemple de réalisation de l'invention notamment en référence à la figure qui représente une vue méridienne d'un schéma d'un pneumatique selon l'invention.

La figure n'est pas représentée à l'échelle pour en simplifier la compréhension.

Sur la figure, le pneumatique 1 est de dimension 305/70 R 22.5. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est radialement surmontée par une armature de sommet 5, formée radialement de l'intérieur à l'extérieur :
- d'une première couche de travail 51 comprenant des câbles métalliques inextensibles 11.35 non frettés, continus sur toute la largeur de la couche, orientés d'un angle égal à 18°,
- d'une seconde couche de travail 52 comprenant des câbles métalliques inextensibles 11.35 non frettés, continus sur toute la largeur de la couche, orientés d'un angle égal à 18° et croisés avec les câbles métalliques de la couche 51,
- d'une couche d'éléments de renforcement circonférentiels 53 comprenant des câbles métalliques en acier 21x28.

L'armature de sommet est elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement 7.

Le pneumatique est gonflé à une pression de 11.5 bars.

La largeur axiale L₅₁ de la première couche de travail 51 est égale à 200 mm.

La largeur axiale L₅₂ de la deuxième couche de travail 52 est égale à 180 mm.

La largeur axiale L₅₃ de la couche d'éléments de renforcement circonférentiels 53 est égale à 136 mm.

La largeur axiale de la bande de roulement L₆ est égale à 221 mm.

La distance D est mesurée entre le point radialement le plus intérieur 8 de la découpure 10, axialement la plus proche du plan équatorial XX', et un point 9 de la surface extérieure de la couche d'éléments de renforcement circonférentiels 53. La distance D est mesurée selon la direction de la projection orthogonale du point 8 sur la surface extérieure de la couche d'éléments de renforcement circonférentiels 53. La distance D est égale à 2.1 mm et donc inférieure à 8 mm.

Des essais ont été réalisés avec des pneumatiques I réalisés selon l'invention et avec des pneumatiques de référence T.

Les pneumatiques de référence T diffèrent des pneumatiques selon l'invention par une armature de sommet constituée d'un empilement de trois couches d'éléments de renforcement circonférentiels en polyamide aromatique.

Des essais d'endurance ont été réalisés en faisant rouler les pneumatiques sur un volant d'essai avec une charge de 7000 daN gonflés à une pression de 13.5 bars à une vitesse de 40 km/h. Le même type d'essai a été réalisé avec un cycle de charges et pressions variables, toujours à 40 km/h.

Lors de ces essais, les pneumatiques I selon l'invention ont présenté de meilleurs résultats que les pneumatiques de référence T. Les pneumatiques I selon l'invention ont parcouru une distance proche du double de celle atteinte avec les pneumatiques de référence T.

Un autre type d'essais a été mené pour tester les différents pneumatiques en termes d'usure.

Ces essais sont réalisés sur sol plan et consistent à mesurer la forme et les contraintes dans l'aire de contact. Ils sont complétés par des comparaisons directes sur véhicule permettant d'apprécier la performance des pneumatiques en termes de durée de vie.

Concernant les pneumatiques de référence T, il apparait une usure irrégulière, les bords de la bande de roulement étant fortement usés, celle-ci semblant être la conséquence d'une mise à plat hétérogène entre le centre et les épaules.

Les pneumatiques I selon l'invention permettent d'homogénéiser les déformations de la surface de contact lors de la mise à plat et ainsi d'assurer une usure régulière. Ils peuvent donc parcourir une distance plus importante sans montrer d'usure irrégulière trop marquée nécessitant un changement de pneumatique. Les pneumatiques I selon l'invention ont ainsi parcouru une distance supérieure de 40% à celle atteinte avec les pneumatiques de référence T.

## Revendications

1. - Pneumatique (1) pour véhicule de type métropolitain, comprenant une armature de carcasse radiale (2), ledit pneumatique comprenant une armature de sommet (5), comprenant deux couches de sommet de travail d'éléments (51, 52) de renforcement métalliques croisés d'une couche à l'autre en faisant avec la direction circonférentielle des angles compris entre 10° et 45°, lesdits angles étant orientés de part et d'autre de la direction circonférentielle, l'armature de sommet (5) étant coiffée radialement d'une bande de roulement (6) comportant au moins une découpure circonférentielle (10), ladite bande de roulement étant réunie à deux bourrelets (3) par l'intermédiaire de deux flancs, l'armature de sommet comprenant au moins une couche d'éléments de renforcement circonférentiels (53) métalliques, radialement extérieure aux deux couches de travail,
**caractérisé en ce que** les deux couches de sommet de travail et ladite au moins une couche d'éléments de renforcement circonférentiels sont seules présentes pour constituer l'armature de sommet sur la totalité de la largeur axiale de l'armature de sommet et **en ce que,** dans un plan méridien, la distance D, entre le point radialement le plus intérieur de la découpure circonférentielle axialement la plus proche du plan équatorial et un point de la surface extérieure de ladite au moins une couche d'éléments de renforcement circonférentiels est inférieure à 8 mm, ladite distance D étant mesurée selon la direction de la projection orthogonale (9) du point (8) radialement le plus intérieur de la découpure circonférentielle (10) axialement la plus proche du plan équatorial (XX') sur la surface radialement extérieure de ladite au moins une couche d'éléments de renforcement circonférentiels (53).

2. - Pneumatique (1) selon la revendication 1, **caractérisé en ce que** la découpure (10) axialement la plus proche du plan équatorial est une rainure circonférentielle.

3. - Pneumatique (1) selon l'une des revendications 1 ou 2, **caractérisé en ce que** la distance D est inférieure à 5 mm.

4. - Pneumatique (1) selon l'une des revendications 1 à 3, **caractérisé en ce que** les éléments de renforcement des couches de sommet de travail (51, 52) sont inextensibles.

5. - Pneumatique (1) selon l'une des revendications 1 à 4, **caractérisé en ce que** les éléments de renforcement de ladite au moins une couche d'éléments de renforcement circonférentiels (53) sont des éléments de renforcement métalliques présentant un module sécant à 0,7 % d'allongement compris entre 10 et 120 GPa et un module tangent maximum inférieur à 150 GPa.

6. - Pneumatique (1) selon la revendication 5, **caractérisé en ce que** l'angle formé avec la direction circonférentielle par les éléments de renforcement des couches de sommet de travail (51, 52) est inférieur à 30° et de préférence inférieur à 25°.

## Patentansprüche

1. Luftreifen (1) für ein U-Bahn-Fahrzeug, der eine Radialkarkassenverstärkung (2) umfasst, wobei der Luftreifen eine Gürtelverstärkung (5) umfasst, die zwei Arbeitsgürtellagen aus metallischen Festigkeitselementen (51, 52) umfasst, die sich von einer Lage zur anderen kreuzen, wobei sie mit der Umfangsrichtung Winkel zwischen 10° und 45° bilden, wobei die Winkel zu beidseits der Umfangsrichtung ausgerichtet sind, wobei die Gürtelverstärkung (5) radial von einem Laufstreifen (6) überdeckt wird, der mindestens einen umfänglichen Ausschnitt (10) beinhaltet, wobei der Laufstreifen über zwei Seitenwände mit zwei Wülsten (3) verbunden ist, wobei die Gürtelverstärkung mindestens eine Lage aus metallischen umfänglichen Festigkeitselementen (53) radial außerhalb der beiden Arbeitslagen umfasst, **dadurch gekennzeichnet, dass** die beiden Arbeitsgürtellagen und die mindestens eine Lage aus umfänglichen Festigkeitselementen allein vorhanden sind, um die Gürtelverstärkung über die gesamte axiale Breite der Gürtelverstärkung zu bilden, und dass, in einer Meridianebene, der Abstand D zwischen dem radial innersten Punkt des zur Äquatorialebene axial nächstgelegenen umfänglichen Ausschnitts und einem Punkt der äußeren Oberfläche der mindestens einen Lage aus umfänglichen Festigkeitselementen weniger als 8 mm beträgt, wobei der Abstand D entlang der Richtung der orthogonalen Projektion (9) des radial innersten Punkts (8) des zur Äquatorialebene (XX') axial nächstgelegenen umfänglichen Ausschnitts (10) auf die radial äußere Oberfläche der mindestens einen Lage aus umfänglichen Festigkeitselementen (53) gemessen wird.

2. Luftreifen (1) nach Anspruch 1, **dadurch gekennzeichnet, dass** der zur Äquatorialebene axial nächstgelegene Ausschnitt (10) eine umfängliche Rille ist.

3. Luftreifen (1) nach einem der Ansprüche 1 oder 2, **dadurch gekennzeichnet, dass** der Abstand D weniger als 5 mm beträgt.

4. Luftreifen (1) nach einem der Ansprüche 1 bis 3, **dadurch gekennzeichnet, dass** die Festigkeitselemente der Arbeitsgürtellagen (51, 52) nicht dehnbar sind.

5. Luftreifen (1) nach einem der Ansprüche 1 bis 4, **dadurch gekennzeichnet, dass** die Festigkeitselemente der mindestens einen Lage aus umfänglichen Festigkeitselementen (53) metallische Festigkeitselemente sind, die einen Sekantenmodul bei 0,7 % Dehnung zwischen 10 und 120 GPa und einen maximalen Tangentenmodul von weniger als 150 GPa aufweisen.

6. Luftreifen (1) nach Anspruch 5, **dadurch gekennzeichnet, dass** der von den Festigkeitselementen der Arbeitsgürtellagen (51, 52) mit der Umfangsrichtung gebildete Winkel kleiner als 30° und bevorzugt kleiner als 25° ist.

## Claims

1. - Tyre (1) for a vehicle of the rapid transit type, comprising a radial carcass reinforcement (2), said tyre comprising a crown reinforcement (5), comprising two working crown layers (51, 52) with metal reinforcing elements that are crossed from one layer to the next, making angles of between 10° and 45° with the circumferential direction, said angles being oriented on either side of the circumferential direction, the crown reinforcement (5) being capped radially by a tread (6) having at least one circumferential cut (10), said tread being joined to two beads (3) via two sidewalls, the crown reinforcement comprising at least one layer of metal circumferential reinforcing elements (53) radially on the outside of the two working layers, **characterized in that** the two working crown layers and said at least one layer of circumferential reinforcing elements are the only layers present to make up the crown reinforcement across the entire axial width of the crown reinforcement, and **in that,** in a meridian plane, the distance D between the radially innermost point of the circumferential cut axially the closest to the equatorial plane and a point on the outer surface of said at least one layer of circumferential reinforcing elements is less than 8 mm, said distance D being measured along the direction of the orthogonal projection (9) of the radially innermost point (8) of the circumferential cut (10) axially the closest to the equatorial plane (XX') onto the radially outer surface of said at least one layer of circumferential reinforcing elements (53).

2. - Tyre (1) according to Claim 1, **characterized in that** the cut (10) axially the closest to the equatorial plane is a circumferential groove.

3. - Tyre (1) according to either of Claims 1 and 2, **characterized in that** the distance D is less than 5 mm.

4. - Tyre (1) according to one of Claims 1 to 3, **characterized in that** the reinforcing elements of the working crown layers (51, 52) are inextensible.

5. **-** Tyre (1) according to one of Claims 1 to 4, **characterized in that** the reinforcing elements of said at least one layer of circumferential reinforcing elements (53) are metal reinforcing elements having a secant modulus at 0.7% elongation of between 10 and 120 GPa and a maximum tangent modulus of less than 150 GPa.

6. - Tyre (1) according to Claim 5, **characterized in that** the angle formed by the reinforcing elements of the working crown layers (51, 52) with the circumferential direction is less than 30° and preferably less than 25°.
